# FASCICULE DE BREVET EUROPEEN

(11) **EP 2 300 319 B1**
(45) Date de publication et mention de la délivrance du brevet: **21.11.2012**
(21) Numéro de dépôt: 09761927.4
(22) Date de dépôt: 09.06.2009
(51) Int. Cl.: B64C 25/26, B64C 25/22

(54) **DISPOSITIF DE VERIN POUR SYSTEME DE TRAIN D'ATTERRISSAGE D'AERONEF**
ZYLINDERVORRICHTUNG FÜR FLUGZEUGFAHRWERK
JACK DEVICE FOR AIRCRAFT LANDING GEAR SYSTEM

(30) Priorité: 13.06.2008 FR 0853942
(43) Date de publication de la demande: 30.03.2011
(73) Titulaire: Airbus Operations, 31060 Toulouse (FR)
(72) Inventeur: DERVAULT, Franck, F-31830 Plaisance du Touch (FR)
(74) Mandataire: Ilgart, Jean-Christophe
(86) Numéro de dépôt international: PCT/FR2009/051083
(87) Numéro de publication internationale: WO 2009/150376

(56) Documents cités:
- EP-A- 1 568 893
- WO-A-01/92732
- WO-A-86/07427
- FR-A- 1 189 523
- JP-A- 2001 032 803
- US-B1- 7 377 736

## Description

### DOMAINE TECHNIQUE

La présente invention concerne un dispositif de vérin, et plus particulièrement un dispositif de vérin destiné à manoeuvrer un train d'atterrissage d'aéronef ou une trappe de case de train d'atterrissage d'aéronef.

### ETAT DE LA TECHNIQUE ANTERIEURE

Dans de nombreux aéronefs, le train d'atterrissage est escamotable, c'est-à-dire qu'il est monté de manière articulée dans un logement de réception du train, appelé case de train, situé à l'intérieur du fuselage de l'aéronef.

Habituellement, un système de manoeuvre et d'accrochage est prévu pour assurer, d'une part le pivotement du train d'atterrissage autour de son axe, et d'autre part le verrouillage du train dans la position train rentré à l'intérieur de la case de train.

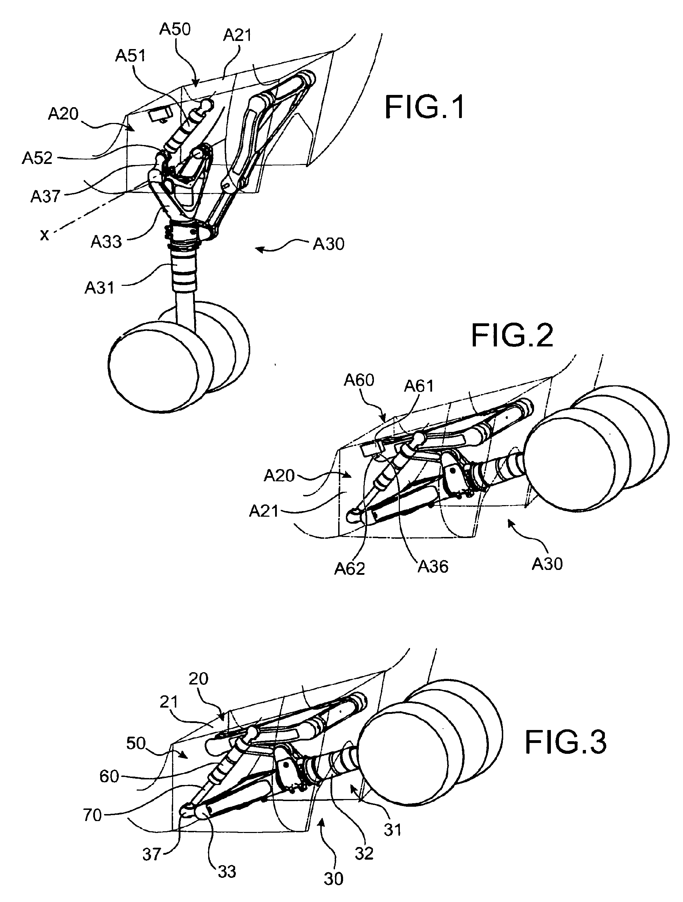

Un exemple classique de système de manoeuvre et d'accrochage est représenté sur les figures 1 et 2.

Comme le montre la figure 1, le train d'atterrissage A30 occupe la position dite « train sorti » dans laquelle la jambe de train A31 est située en-dehors de la case de train A20.

Le système de manoeuvre et d'accrochage comprend un dispositif de vérin A50, généralement un vérin hydraulique A50, qui assure le pivotement de la jambe de train A31 autour de l'axe de pivotement X. Dans l'exemple représenté sur la figure 1, le vérin A50 est en configuration tige rentrée lorsque le train est sorti. Le corps de vérin A51 est monté sur la structure A21 de la case de train A20 et la tige de vérin A52 est montée sur un levier A37 fixé à la potence A33 du train.

La figure 2 montre la configuration en vol de croisière dans laquelle le train A30 est maintenu verrouillé dans la position train rentré à l'intérieur de la case de train A20.

Le système de manoeuvre et d'accrochage comprend alors un dispositif A60 dédié au verrouillage du train dans cette position, généralement un boîtier d'accrochage A60 monté sur la structure A21 de la case de train A20 qui coopère avec une tige d'accrochage A36 montée sur le train A30.

Le boîtier d'accrochage A60 comprend habituellement un carter A61 fixé à la structure A21 de la case de train A20, sur lequel est monté pivotant un crochet de verrouillage A62. Le crochet A62 est conçu pour recevoir la tige d'accrochage A36 du train, de manière à assurer le verrouillage du train A30 dans sa position train rentré.

La chaîne mécanique du boîtier d'accrochage A60 comporte classiquement un ensemble d'éléments mécaniques articulés, parmi lesquels un levier de verrouillage relié au crochet A62. Un embiellage complexe permet d'activer le levier de verrouillage par plusieurs moyens d'actionnement propres au mode de fonctionnement, normal ou de secours.

En mode de fonctionnement normal, le premier moyen d'actionnement du boîtier d'accrochage peut être une électrovanne reliée au boîtier par un conduit hydraulique. En cas de panne, un second moyen d'actionnement, comme un vérin pyrotechnique à usage unique, assure mécaniquement le pivotement du crochet A62 et ainsi le déverrouillage du train d'atterrissage.

Le système de manoeuvre et d'accrochage comprend ainsi deux dispositifs distincts, dédiés chacun à l'une de ces deux fonctions.

L'utilisation d'un dispositif dédié à l'accrochage présente, cependant, un certain nombre d'inconvénients.

Outre les problèmes d'encombrement du boîtier d'accrochage et de la tige d'accrochage, le dispositif d'accrochage présente un défaut important de fiabilité, du fait du grand nombre de pièces mécaniques susceptibles de se déformer. Le moindre jeu ou la moindre déformation de ces pièces mécaniques, notamment au niveau de l'embiellage du boîtier d'accrochage ou de la tige d'accrochage, peut entraîner un blocage du crochet de verrouillage, voire même son déclenchement intempestif.

Ces inconvénients se retrouvent également dans des systèmes comme décrit dans le document FR 1189523, ou dans le système de manoeuvre et d'accrochage des trappes de la case de train. Ces trappes, qui ferment la case de train en vol de croisière pour conserver le profil aérodynamique de l'aéronef, doivent en effet être maintenues verrouillées en position trappe fermée. Le système habituellement utilisé est identique à celui décrit précédemment.

### EXPOSÉ DE L'INVENTION

L'invention a principalement pour objet un dispositif de vérin qui peut être verrouillé dans une configuration déterminée et déverrouillé simplement.

Le dispositif de vérin comporte un corps de vérin et un piston mobile en translation dans un espace défini par une surface intérieure dudit corps de vérin, ledit piston délimitant une première chambre et une seconde chambre à l'intérieur dudit espace.

Selon l'invention, le dispositif de vérin comporte des moyens de verrouillage comprenant au moins une pièce mobile de verrouillage disposée dans un logement débouchant au niveau de ladite surface intérieure de corps de vérin, ladite pièce mobile étant apte à être commandée :
- d'une position extraite de verrouillage, dans laquelle une portion de butée de ladite pièce mobile est en saillie hors dudit logement et coopère avec ledit piston, de manière à bloquer en translation celui-ci,
- à une position rétractée de déverrouillage, dans laquelle ladite portion de butée de ladite pièce mobile est située à l'intérieur dudit logement, de manière à rendre libre en translation ledit piston.

De plus, ledit piston comprend d'une part un évidement situé sur la surface circonférentielle du piston et conçu pour recevoir ladite portion de butée lorsque la pièce mobile est en position extraite de verrouillage, et d'autre part un conduit de communication fluidique reliant la première chambre et l'évidement, permettant de commander le déplacement de la pièce mobile de la position extraite de verrouillage à la position rétractée de déverrouillage, par effort de pression du fluide sur ladite pièce mobile.

Le dispositif de vérin selon l'invention peut assurer la manoeuvre d'un train d'atterrissage monté articulé sur une case de train, ou la manoeuvre d'une trappe de case de train. L'invention est alors une simplification importante du système de manoeuvre et d'accrochage selon l'art antérieur, dans la mesure où il n'est plus nécessaire d'utiliser un dispositif spécifiquement dédié au verrouillage du train ou de la trappe dans une position donnée.

En effet, le dispositif de vérin selon l'invention peut être verrouillé dans une configuration qui correspond, par exemple, à la position train rentré ou à la position trappe fermée. A partir de cette configuration de verrouillage, le dispositif de vérin peut être déverrouillé simplement de manière à assurer la sortie du train ou l'ouverture de la trappe.

Outre l'encombrement réduit du dispositif de vérin, du fait de l'absence de boîtier d'accrochage et de tige d'accrochage selon l'art antérieur, le dispositif de vérin présente une fiabilité importante. En effet, les moyens de verrouillage du dispositif de vérin comprennent peu de pièces mécaniques susceptibles d'être déformées. Notamment, il n'y a pas d'embiellage complexe comme celui présent dans le boîtier d'accrochage selon l'art antérieur. Les risques de déformation, de grippage et donc de blocage sont ainsi écartés.

Par ailleurs, les moyens de verrouillage selon l'invention peuvent être conçus pour assurer le verrouillage du dispositif de vérin dans une configuration autre que celle correspondant à la position train rentrée ou trappe sortie.

De plus, les moyens de verrouillage peuvent comprendre plusieurs pièces mobiles de verrouillage de conception identique ou similaire, pour assurer le verrouillage du dispositif de vérin dans plusieurs configurations possibles.

Le mécanisme de déverrouillage du dispositif de vérin présente un fonctionnement simplifié et automatique, car directement lié à l'actionnement du dispositif de vérin. Il n'est donc pas nécessaire de prévoir un moyen de commande dédié aux moyens de verrouillage, ni de calculateur électronique pour commander les séquences de fonctionnement.

Ladite pièce mobile est de préférence mobile en translation dans ledit logement suivant un axe de translation sensiblement perpendiculaire à l'axe de déplacement du piston.

Ledit évidement comprend une surface de fond. Ledit conduit de communication fluidique débouche avantageusement dans ladite surface de fond dudit évidement.

Ledit conduit de communication fluidique débouche avantageusement dans ledit évidement suivant un axe sensiblement parallèle à l'axe de translation de ladite pièce mobile.

Ainsi, le conduit de communication fluidique permet de dimensionner le piston, et en particulier l'évidement du piston, de manière à diminuer le jeu entre les surfaces de l'évidement du piston, en particulier les surfaces latérales de l'évidement, et la portion de butée de la pièce mobile.

L'effort de pression du fluide est alors essentiellement exercé sur la paroi intérieure de la portion de butée, et suivant un axe sensiblement parallèle à l'axe de translation de la pièce mobile, ce qui améliore le retrait de celle-ci de l'évidement du piston. De plus, la réduction sensible du jeu entre les surfaces latérales de l'évidement et la portion de butée de la pièce mobile réduit substantiellement tous les petits déplacements non désirés du piston suivant son axe de translation, alors que le dispositif de vérin est en configuration verrouillée.

Les moyens de verrouillage comprennent avantageusement un moyen de rappel disposé dans ledit logement pour maintenir, au-dessous d'une certaine pression du fluide dans la première chambre, ladite portion de butée de ladite pièce mobile en saillie hors du logement.

Dans un mode de réalisation de l'invention, ledit piston délimite une première chambre et une seconde chambre à l'intérieur dudit espace, et ledit logement est situé au niveau d'une extrémité du corps de vérin du côté de la première chambre, ladite première chambre recevant une tige de vérin.

Dans un autre mode de réalisation de l'invention, ledit logement est situé au niveau d'une extrémité du corps de vérin du côté de la première chambre, ladite seconde chambre recevant une tige de vérin.

L'invention a également pour objet un train d'atterrissage d'aéronef comportant une jambe de train, une potence définissant un axe de pivotement de la jambe et un dispositif de vérin selon l'une quelconque des caractéristiques précédentes, destiné à assurer le pivotement de ladite jambe autour dudit axe de pivotement. Dans ce mode de réalisation de l'invention, ledit dispositif de vérin comprend une tige de vérin montée en une première extrémité sur ledit piston et montée en une seconde extrémité sur ledit train d'atterrissage, ledit corps de vérin étant destiné à être monté sur ladite case de train.

Ainsi, le dispositif selon l'invention présente un unique point de montage sur la structure de la case de train. Les zones de reprise d'effort de la structure, qu'il nécessite de renforcer par des raidisseurs ou des longerons, sont donc moins nombreuses par rapport au système de manoeuvre et d'accrochage selon l'art antérieur, ce qui permet de répondre aux exigences d'économie de masse propres à l'aéronautique.

L'invention a également pour objet une trappe de case de train d'atterrissage d'aéronef équipée d'un dispositif de vérin selon l'une quelconque des caractéristiques précédentes, destiné à assurer l'ouverture et la fermeture de ladite trappe. Dans ce mode de réalisation de l'invention, ledit dispositif de vérin comprend une tige de vérin montée en une première extrémité sur ledit piston et montée en une seconde extrémité sur ladite trappe, ledit corps de vérin étant destiné à être monté sur ladite case de train.

L'invention a également pour objet un système de train d'atterrissage d'aéronef comprenant une case de train équipée d'au moins une trappe de case selon la caractéristique précédente et d'un train d'atterrissage selon la caractéristique précédente.

D'autres avantages et caractéristiques de l'invention apparaîtront dans la description détaillée non limitative ci-dessous.

### BRÈVE DESCRIPTION DES DESSINS

On décrira à présent, à titre d'exemples non limitatifs, des modes de réalisation de l'invention, en se référant aux dessins annexés, dans lesquels :
Les figures 1 et 2, déjà décrites, sont des vues générales en perspective et de côté d'un train d'atterrissage monté sur une case de train en position train sorti (figure 1) et en position train rentré (figure 2) ;
La figure 3 est une vue générale en perspective et de côté d'un train d'atterrissage monté sur une case de train en position train rentré, et maintenu en position verrouillé par le dispositif de vérin selon le mode de réalisation préféré de l'invention ;
La figure 4 est une vue en coupe longitudinale d'une partie du dispositif de vérin selon le mode de réalisation préféré de réalisation ;
La figure 5 est une vue agrandie d'une zone de la partie du dispositif représentée sur la figure 4 ;
La figure 6 est une vue en coupe transversale selon le plan A-A de la partie du dispositif représentée sur la figure 4 ;
Les figures 7A à 7D représentent différentes séquences de fonctionnement du dispositif selon le mode de réalisation préféré de l'invention, illustrant le principe de verrouillage de l'invention ; et
Les figures 8A à 8D représentent différentes séquences de fonctionnement du dispositif selon le mode de réalisation préféré de l'invention, illustrant le principe de déverrouillage de l'invention.

### EXPOSÉ DÉTAILLÉ D'UN MODE DE RÉALISATION PREFERE

La figure 3 montre une vue générale en perspective et de côté du dispositif de vérin 50 selon le mode de réalisation préféré de l'invention monté sur un train d'atterrissage 30. Celui-ci est logé dans une case de train en position train rentré et maintenu verrouillé par ledit dispositif de vérin.

Le dispositif de vérin 50 est monté d'une part sur le train 30 et d'autre part sur la structure 21 de la case de train 20.

Plus précisément, le dispositif de vérin 50 comprend un corps de vérin 60 monté pivotant ou rotulant sur une paroi supérieure de la structure 21 de la case 20, et une tige de vérin 70 montée pivotante ou rotulante sur le train 30. La tige de vérin 70 est, dans l'exemple représenté sur la figure 3, montée sur un levier 37 solidaire de la potence de train 33.

Le dispositif de vérin 50 est alors en configuration tige sortie lorsque le train est rentré dans la case.

Dans une variante de réalisation non représentée, la tige 70 est montée sur le caisson 32 de la jambe de train 31, le dispositif de vérin 50 étant alors dans une configuration tige rentrée.

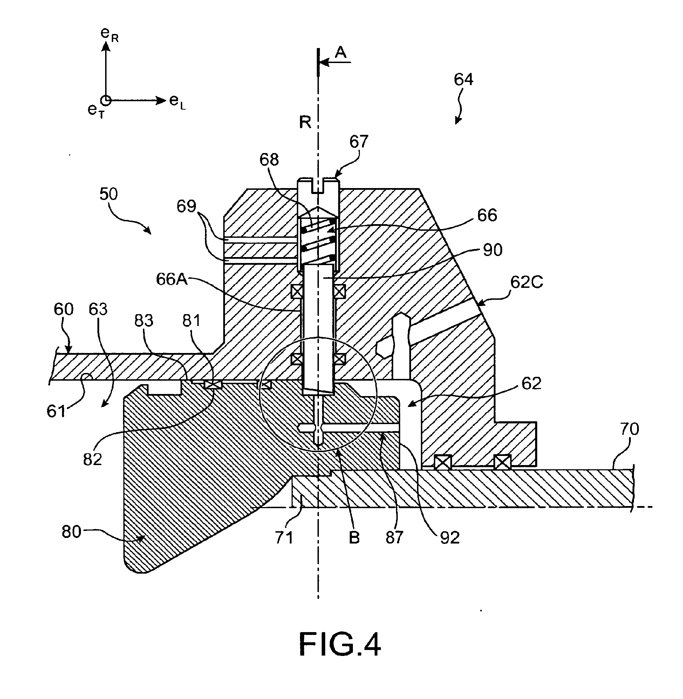

La structure du dispositif de vérin va maintenant être décrite en détail, en référence à la figure 4. La figure 4 est une vue en coupe longitudinale d'une partie du dispositif de vérin 50, celui-ci occupant une configuration tige sortie verrouillée.

Un repère orthogonal direct en coordonnées cylindriques (e_{L},e_{R},e_{T}) est présenté sur la figure 4. e_{L} donne la direction longitudinale et définit l'axe longitudinal du vérin, e_{R} est la direction radiale et e_{T} la direction tangentielle ou circonférentielle.

Le dispositif de vérin 50 comporte un corps de vérin 60 de forme cylindrique, de préférence circulaire, dont la surface intérieure 61 définit un espace cylindrique.

Un piston 80 est monté coulissant avec étanchéité à l'intérieur dudit espace de manière à définir une première chambre 62 et une seconde chambre 63.

La tige de vérin 70 est fixée au piston 80 en une première extrémité 71 et traverse la première chambre 62. La seconde extrémité de la tige 70 peut être montée sur le train d'atterrissage, comme décrit précédemment.

La première chambre 62 est alimentée par un conduit 62C permettant le remplissage de cette chambre d'un fluide, de préférence incompressible, soumis éventuellement à une pression déterminée. Ce fluide peut être, par exemple, de l'huile.

La seconde chambre 63, comme la première chambre 62, peut aussi être alimentée par ledit fluide, par l'intermédiaire d'un autre conduit de remplissage (non représenté).

Les conduits de remplissage traversent le corps de vérin 60 et sont situés de préférence dans les première et seconde extrémités 64, 65 respectives du corps de vérin 60.

L'étanchéité entre la première chambre 62 et la seconde chambre 63 peut être assurée par au moins un joint d'étanchéité annulaire 81 disposé à l'intérieur d'un évidement annulaire 82 en forme de gorge réalisé sur la surface circonférentielle 83 du piston 80, de sorte que le joint d'étanchéité 81 soit en contact permanent avec la surface intérieure 61 du corps de vérin 60.

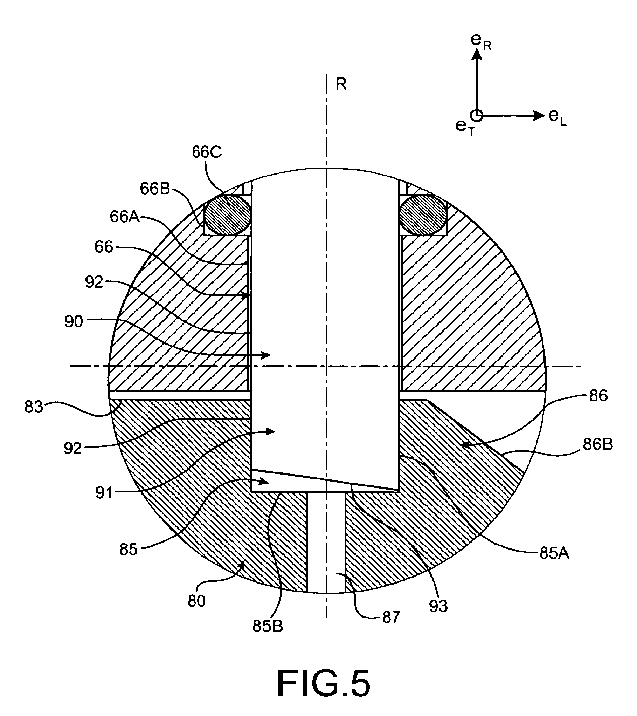

Le dispositif de vérin selon le mode de réalisation préféré de l'invention comprend des moyens de verrouillage pour assurer le verrouillage du dispositif dans une configuration donnée, qui vont maintenant être décrits en détail, en référence aux figures 4 et 5.

La figure 5 montre un agrandissement d'une partie du dispositif de vérin, correspondant à la zone B indiquée sur la figure 4.

La première extrémité 64 du corps de vérin 60 comprend un logement 66 conçu pour recevoir une pièce mobile 90.

Le logement 66 débouche sur la surface intérieure 61 du corps de vérin 60 suivant un axe R sensiblement perpendiculaire à celle-ci.

Le logement 66 et la pièce mobile 90 présentent une forme cylindrique, de préférence circulaire.

Un bouchon de fermeture 67 assure la fermeture étanche du logement 66 vis-à-vis de l'environnement du dispositif de vérin.

La pièce mobile 90 est, de préférence, mobile en translation avec étanchéité suivant l'axe R à l'intérieur du logement 66. L'étanchéité peut être assurée par au moins un joint d'étanchéité annulaire 66C disposé dans un évidement en forme de gorge 66B réalisé sur la paroi latérale 66A du logement 66 (figure 5). Le joint 66B est en contact permanent avec la paroi latérale 92 de la pièce mobile 90.

La pièce mobile 90 peut coopérer avec un évidement 85 en forme de gorge réalisé sur la surface circonférentielle 83 du piston 80.

Plus précisément, comme le montrent les figures 4 et 5, la position du piston 80, en position tige sortie, est telle que l'évidement 85 est en vis-à-vis du logement 66.

Un ressort hélicoïdal 68 disposé dans le logement 66 entre le bouchon de fermeture 67 et la pièce mobile 90 peut réaliser la saillie hors du logement 66 d'une portion dite de butée 91 de la pièce mobile 90. Dans les figures 4 et 5, la portion de butée 91 occupe au moins partiellement l'évidement 85.

Plus généralement, lorsque le ressort n'est pas sollicité, celui-ci maintient la pièce mobile 90 au moins partiellement dans le logement 66, de sorte que la portion de butée 91 soit en saillie hors du logement 66. Par ailleurs, la sortie de la portion de butée 91 de la pièce mobile 90 hors du logement 66 peut également être limitée par un épaulement pratiqué sur la face opposée au bouchon de fermeture 67 du logement 66 et à l'extrémité de la pièce mobile 90.

Le piston 80 comprend un conduit de communication fluidique 87 reliant la première chambre 62 à l'évidement 85. Le conduit 87 débouche dans la première chambre 62 par la première surface latérale 92 du piston 80, et dans l'évidement 85 par la surface de fond 85B de celui-ci (figure 5). Ainsi, le fluide remplissant la première chambre 62 peut communiquer et remplir l'évidement 85.

De préférence, le conduit 87 débouche dans l'évidement 85 suivant un axe sensiblement parallèle à l'axe de translation R de la pièce mobile 90.

La figure 5 montre la portion de butée 91 de la pièce mobile 90 occupant au moins partiellement l'évidement 85 du piston 80.

De manière à assurer le blocage en translation du piston 80, la paroi latérale 92 de la portion de butée 91 de la pièce mobile est sensiblement en contact avec la paroi latérale 85A de l'évidement 85. Ainsi, le piston 85 est bloqué en translation suivant les directions e_{L} et -e_{L}.

Par ailleurs, la portion de butée 91 de la pièce mobile 90 comprend avantageusement une paroi intérieure inclinée 93, de sorte que la partie de la paroi latérale 92 est plus longue suivant e_{R} du côté de la première chambre 62 que du côté de la seconde chambre 63.

Cette paroi intérieure inclinée 93 de la pièce mobile 90 peut coopérer, lors d'une étape de la phase de verrouillage décrite plus loin, avec une paroi inclinée 86B d'un épaulement 86 réalisé sur la surface circonférentielle 83 du piston 80.

L'épaulement 86 est disposé dans la continuité de l'évidement 85 suivant la direction e_{L}, et présente une forme sensiblement triangulaire. Il comprend une paroi latérale 86A qui coïncide avec une partie de la paroi latérale 85A de l'évidement 85, et une paroi inclinée 86B.

Les deux parois inclinées 93 et 86B présentent une inclinaison sensiblement similaire et coopèrent l'une avec l'autre lors de la phase de verrouillage, comme il sera décrit plus loin.

En référence à la figure 4, une pluralité de capteurs de position 69, au moins deux, est disposée dans la paroi latérale 66A du logement 66 suivant la direction e_{R}. Les capteurs 69 permettent de contrôler la position de la pièce mobile 90 dans le logement 66 et de vérifier ainsi l'état de verrouillage ou de déverrouillage du dispositif de vérin.

Ils permettent de déduire si la portion de butée 91 de la pièce mobile 90 est en saillie hors du logement 66 ou rétractée à l'intérieur du logement 66. En combinaison avec l'état d'actionnement d'un moyen de commande du dispositif de vérin 50, on peut déduire l'état de verrouillage ou de déverrouillage dudit dispositif de vérin 50.

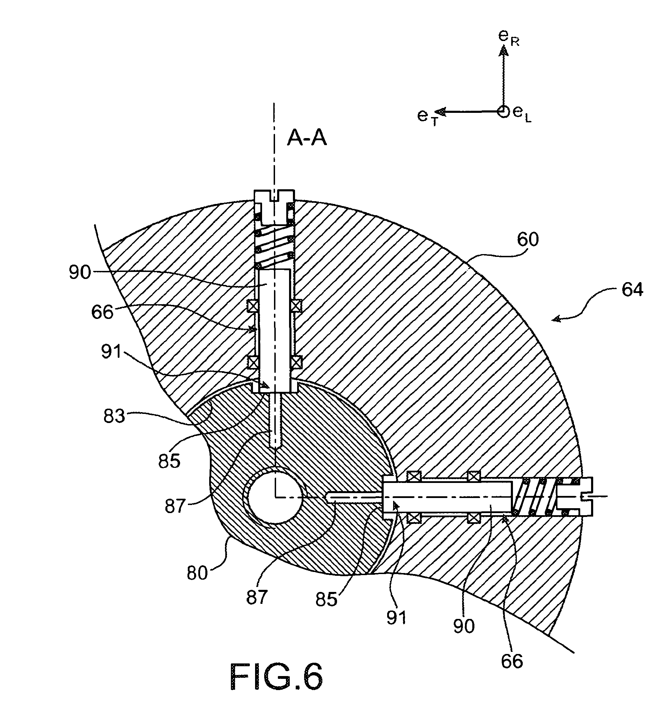

La figure 6 montre une vue en coupe transversale suivant l'axe A-A de la partie du dispositif de vérin représentée sur la figure 4.

Dans ce mode de réalisation de l'invention, les moyens de verrouillage comprennent une pluralité de pièces mobiles 90 dans leur logement 66 respectif. Dans cet exemple, quatre pièces mobiles 90 sont prévues et disposées suivant une symétrie axiale.

Chaque pièce mobile 90 présente une portion de butée 91 qui peut venir occuper un évidement 85 réalisé sur la surface circonférentielle 83 du piston 80. Chaque évidement 85 est relié à la première chambre 62 par un conduit de communication fluidique 87.

L'actionnement du dispositif de vérin 50 est commandé par un moyen de commande, par exemple, une électrovanne. Un circuit hydraulique relie alors l'électrovanne au dispositif de vérin 50. L'électrovanne commande alors le remplissage de la première chambre 62 ou de la seconde chambre 63.

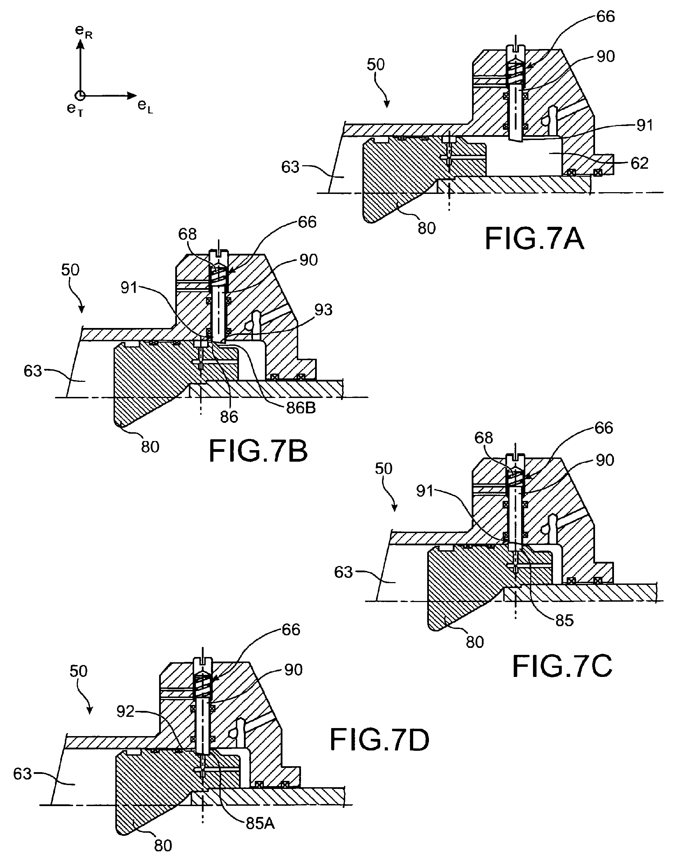

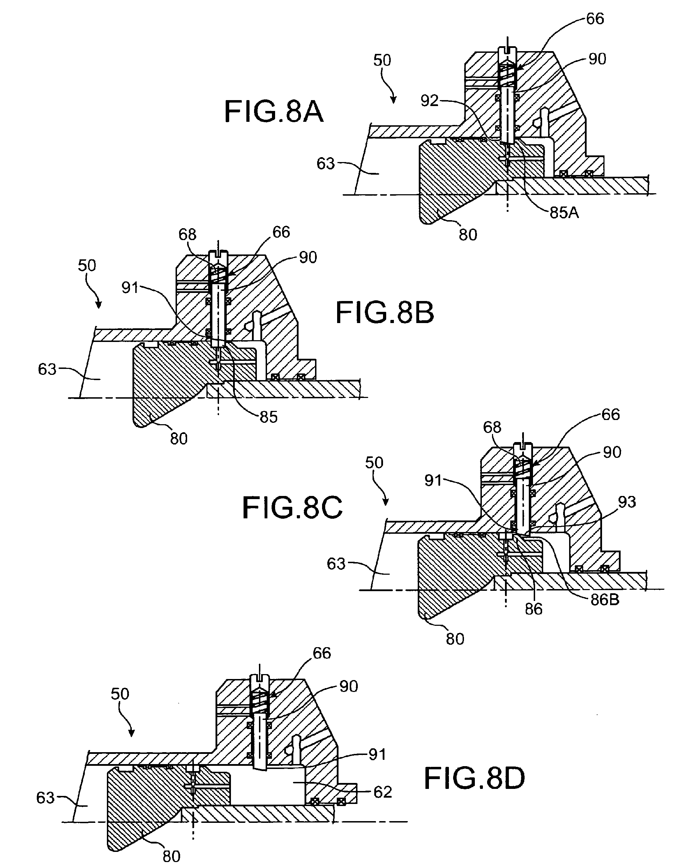

Le principe de fonctionnement du dispositif de vérin est le suivant, en référence aux figures 7A-7D et 8A-8D. Dans les figures 7A-7D et 8A-8D, le dispositif de vérin est représenté partiellement en coupe longitudinale.

Les figures 7A-7D représentent une séquence d'actionnement du dispositif de vérin 50 comprenant les étapes de verrouillage.

La figure 7A montre l'actionnement du dispositif de vérin 50 dans le sens de la sortie de tige. Dans ce cas, le fluide remplit la seconde chambre 63 et exerce un effort sur le piston 80 suivant la direction e_{L}. Ledit piston 80 étant libre en translation, celui-ci se déplace sous l'effet du fluide suivant cette même direction.

La première chambre 62 n'est pas remplit de fluide et n'exerce pas de contre-pression sur le piston 80. Par ailleurs, la pièce mobile 90 occupe une position, dite extraite, c'est-à-dire que sa portion de butée 91 est en saillie hors du logement 66.

Sur la figure 7B, le piston 80 entre en contact avec la pièce mobile 90 et provoque la rétractation de celle-ci à l'intérieur du logement 66.

Plus précisément, la paroi inclinée 86B de l'épaulement 86 du piston 80 entre en contact avec la paroi inclinée 93 de la pièce mobile 90. Le déplacement longitudinal suivant e_{L} de la paroi inclinée 86B de l'épaulement provoque le déplacement radial suivant e_{R} de la paroi inclinée 93 de la pièce mobile 90. Il y a donc rétractation de la pièce mobile 90 suivant la direction e_{R} de sorte que la portion de butée 91 vienne à l'intérieur du logement 66. Le ressort 68 subit alors un effort de compression.

Le déplacement du piston 80 suivant la direction e_{L} se poursuit jusqu'à ce que l'évidement 85 du piston 80 soit en vis-à-vis du logement 66 du corps de vérin 60. Une telle situation est représentée sur la figure 7C, et correspond à la configuration de tige sortie du dispositif de vérin.

La détente du ressort 68 assure le déplacement de la pièce mobile 90 suivant la direction -e_{R} de sorte que la portion de butée 91 vient en saillie du logement 66 et occupe au moins partiellement l'évidement 85 du piston 80. La pièce mobile 90 occupe alors une position extraite de verrouillage.

En conséquence, le piston 80 est bloqué en translation par la pièce mobile 90, dans la mesure où la butée est réalisée entre la paroi latérale 92 de la pièce mobile et la paroi latérale 85A de l'évidement 85.

L'actionnement du dispositif de vérin peut être désactivé. Le dispositif de vérin occupe alors une configuration verrouillée en tige sortie.

Dans le cas de la manoeuvre d'un train d'atterrissage, la séquence de fonctionnement qui vient d'être décrite dans les figures 7A-7D correspond à la rentrée du train et au verrouillage de celui-ci en position train rentré. Dans le cas de la manoeuvre d'une trappe de case de train, cela correspond à la fermeture de la trappe et au verrouillage de celle-ci en position trappe fermée.

Selon l'invention, la pièce mobile 90 est apte à être commandée de ladite position extraite de verrouillage à une position rétractée de déverrouillage.

Cette commande est notamment décrite sur les figures 8A-8D qui représentent une séquence d'actionnement du dispositif de vérin comprenant les étapes de déverrouillage.

La figure 8A montre l'actionnement du dispositif de vérin 50 dans le sens de la rentrée de tige. Dans ce cas, le fluide remplit la première chambre 62. Par l'intermédiaire du conduit de communication fluidique 87, le fluide remplit également l'évidement 85.

Comme le montre la figure 8B, le fluide exerce un effort de pression orienté suivant la direction e_{R} sur la pièce mobile 90, plus précisément sur la paroi intérieure 93 de la pièce mobile 90, ce qui provoque le déplacement de celle-ci suivant cette même direction jusqu'à ce que la portion de butée 91 soit logée à l'intérieur du logement 66.

La pièce mobile 90 occupe alors la position rétractée de déverrouillage.

La rupture de butée est ainsi réalisée entre la portion de butée 91 et l'évidement 85, rendant libre en translation suivant -e_{L} le piston 80.

Sous l'effet du fluide dans la première chambre 62, le piston 80 se déplace suivant -e_{L}, comme le montrent les figures 8C et 8D.

Il est à noter que le verrouillage et le déverrouillage sont effectués de manière automatique, par l'actionnement du dispositif de vérin et du fait de la conception originale dudit dispositif. Il n'est pas nécessaire de prévoir de moyen de commande dédié aux moyens de verrouillage du dispositif de vérin.

Par ailleurs, selon un mode de réalisation non représenté, le dispositif de vérin peut être adapté pour être verrouillé dans une configuration tige rentrée. Le dispositif de vérin est alors conçu pour que la tige de vérin traverse la seconde chambre, non plus la première chambre. Le dispositif de vérin peut ainsi être monté sur le train de sorte que la rentrée de la tige de vérin assure la remontée du train à l'intérieur de la case.

De plus, le dispositif de vérin peut également être conçu pour être verrouillé dans la configuration tige rentrée et dans la configuration tige sortie. Pour cela, chaque première et seconde extrémité du corps de vérin comprend un logement dans lequel est logée une pièce de verrouillage mobile en translation.

Le piston comprend alors un premier évidement pour coopérer avec la pièce mobile de la première extrémité du corps de vérin, et un second évidement pour coopérer avec la pièce mobile de la seconde extrémité du corps de vérin. Les premier et second évidements sont reliés, respectivement, à la première chambre et à la seconde chambre par l'intermédiaire de conduits de communication fluidique.

Bien entendu, il est également possible de concevoir le dispositif de vérin pour pouvoir le verrouiller, non plus dans les configurations tige rentrée et tige sortie, mais dans des configurations intermédiaires situées entre celles-ci.

Le fonctionnement du dispositif de vérin selon ce mode de réalisation est similaire à celui décrit précédemment et n'est donc pas repris ici.

L'invention n'est pas limitée aux exemples représentés. En particulier, d'autres types de pièces mobiles peuvent être utilisés, comme par exemple un crochet monté rotatif sur le corps de vérin et conçu pour coopérer avec le piston, voire un disque monté rotatif et présentant une surface de came apte à occuper un évidement en forme de U réalisé sur le piston.

Par ailleurs, la commande du déplacement de la pièce mobile de la position extraite de verrouillage à la position rétractée de déverrouillage peut être réalisée, non plus seulement par effort de pression du fluide sur ladite pièce mobile comme dans le mode de réalisation préféré de l'invention, mais à l'aide d'un dispositif électromagnétique ou d'un dispositif mécanique agissant ainsi en tant que dispositif de secours.

## Revendications

1. Dispositif de vérin (50) comportant un corps de vérin (60) et un piston (80) mobile en translation dans un espace défini par une surface intérieure (61) dudit corps de vérin (60), ledit piston (80) délimitant une première chambre (62) et une seconde chambre (63) à l'intérieur dudit espace,
**caractérisé en ce qu'**il comporte des moyens de verrouillage comprenant au moins une pièce mobile (90) de verrouillage disposée dans un logement (66) débouchant au niveau de ladite surface intérieure (61) de corps de vérin (60), ladite pièce mobile (90) étant apte à être commandée :
- d'une position extraite de verrouillage, dans laquelle une portion de butée (91) de ladite pièce mobile (90) est en saillie hors dudit logement (66) et coopère avec ledit piston (80), de manière à bloquer en translation celui-ci,
- à une position rétractée de déverrouillage, dans laquelle ladite portion de butée (91) de ladite pièce mobile (90) est située à l'intérieur dudit logement (66), de manière à rendre libre en translation ledit piston,
ledit piston (80) comprenant un évidement (85) situé sur la surface circonférentielle (83) du piston (80) et conçu pour recevoir ladite portion de butée (91) lorsque la pièce mobile (90) est en position extraite de verrouillage,
le piston (80) comprenant un conduit de communication fluidique (87) reliant la première chambre (62) et l'évidement (85), permettant de commander le déplacement de la pièce mobile (90) de la position extraite de verrouillage à la position rétractée de déverrouillage, par effort de pression du fluide sur ladite pièce mobile (90).

2. Dispositif selon la revendication 1, **caractérisé en ce que** ladite pièce mobile (90) est mobile en translation dans ledit logement (66) suivant un axe de translation sensiblement perpendiculaire à l'axe de déplacement du piston (80).

3. Dispositif selon la revendication 2, **caractérisé en ce que** ledit évidement (85B) comprend une surface de fond (85B), ledit conduit de communication fluidique (87) débouchant dans ladite surface de fond (85B) dudit évidement (85).

4. Dispositif selon la revendication 3, **caractérisé en ce que** ledit conduit de communication fluidique (87) débouche dans ledit évidement (85) suivant un axe sensiblement parallèle à l'axe de translation (R) de ladite pièce mobile (90).

5. Dispositif selon l'une quelconque des revendications 1 à 4, **caractérisé en ce que** les moyens de verrouillage comprennent un moyen de rappel (68) disposé dans ledit logement (66) pour maintenir, au-dessous d'une certaine pression du fluide dans la première chambre (62), ladite portion de butée (91) de ladite pièce mobile (90) en saillie hors du logement (66).

6. Dispositif selon l'une quelconque des revendications 1 à 5, **caractérisé en ce que** ledit piston (80) délimite une première chambre (62) et une seconde chambre (63) à l'intérieur dudit espace, et **en ce que** ledit logement (66) est situé au niveau d'une extrémité (64) du corps de vérin (60) du côté de la première chambre (62), ladite première chambre (62) recevant une tige de vérin (70).

7. Dispositif selon l'une quelconque des revendications 1 à 5, **caractérisé en ce que** ledit piston (80) délimite une première chambre (62) et une seconde chambre (63) à l'intérieur dudit espace, et **en ce que** ledit logement (66) est situé au niveau d'une extrémité (64) du corps de vérin (60) du côté de la première chambre (62), ladite seconde chambre (63) recevant une tige de vérin (70).

8. Train d'atterrissage (30) d'aéronef, destiné à être monté articulé sur une case de train (20), comportant une jambe de train (31), une potence (33) définissant un axe de pivotement (X) de la jambe (31) et un dispositif de vérin (50) selon l'une quelconque des revendications 1 à 7 destiné à assurer le pivotement de ladite jambe (31) autour dudit axe de pivotement (X), ledit dispositif de vérin (50) comprenant une tige de vérin (70) montée en une première extrémité sur ledit piston (80) et montée en une seconde extrémité sur ledit train d'atterrissage (30), ledit corps de vérin (60) étant destiné à être monté sur ladite case de train (20).

9. Trappe (40) de case de train d'atterrissage (20) d'aéronef équipée d'un dispositif de vérin (50) selon l'une quelconque des revendications 1 à 7 destiné à assurer l'ouverture et la fermeture de ladite trappe (40), ledit dispositif de vérin (50) comprenant une tige de vérin (70) montée en une première extrémité sur ledit piston (80) et montée en une seconde extrémité sur ladite trappe (40), ledit corps de vérin (60) étant destiné à être monté sur ladite case de train (20).

10. Système de train d'atterrissage d'aéronef comprenant une case de train (20) équipée d'au moins une trappe (40) de case selon la revendication 9 et d'un train d'atterrissage (30) selon la revendication 8.

## Claims

1. A cylinder device (50) including a cylinder barrel (60) and a piston (80) translationally movable in a space defined by an inner surface (61) of said cylinder barrel (60), said piston (80) bounding a first chamber (62) and a second chamber (63) inside said space,
**characterised in that** it includes latching means comprising at least one latching movable part (90) provided in a housing (66) opening into said inner surface (61) of the cylinder barrel (60), said movable part (90) being controllable:
- from a latching extended position, wherein a stop portion (91) of said movable part (90) is projecting from said housing (66) and cooperates with said piston (80), so as to translationally lock the same,
- to a unlatching retracted position, wherein said stop portion (91) of said movable part (90) is located inside said housing (66), so as to make said piston translationally free,
said piston (80) comprising a recess (85) located on the circumferential surface (83) of the piston (80) and designed to receive said stop portion (91) when the movable part (90) is in the latching extended position,
the piston (80) comprising a fluid communication duct (87) connecting the first chamber (62) and the recess (85), for controlling the movement of the movable part (90) from the latching extended position to the unlatching retracted position, by pressure strain of the fluid on said movable part (90).

2. The device according to claim 1, **characterised in that** said movable piston (90) is translationally movable in said housing (66) along an axis of translation substantially perpendicular to the axis of movement of the piston (80).

3. The device according to claim 2, **characterised in that** said recess (85B) comprises a bottom surface (85B), said fluid communication duct (87) opening into said bottom surface (85B) of said recess (85).

4. The device according to claim 3, **characterised in that** said fluid communication duct (87) opens into said recess (85) along an axis substantially parallel to the axis of translation (R) of said movable part (90).

5. The device according to any of claims 1 to 4, **characterised in that** the latching means comprise a return means (68) provided in said housing (66) to keep, below some pressure of the fluid in the first chamber (62), said stop portion (91) of said movable part (90) projecting from the housing (66).

6. The device according to any of claims 1 to 5, **characterised in that** the piston (80) bounds a first chamber (62) and a second chamber (63) inside said space, and **in that** said housing (66) is located at an end (64) of the cylinder barrel (60) on the first chamber (62) side, said first chamber (62) receiving a cylinder rod (70).

7. The device according to any of claims 1 to 5, **characterised in that** the piston (80) bounds a first chamber (62) and a second chamber (63) inside said space, and **in that** said housing (66) is located at an end (64) of the cylinder barrel (60) on the first chamber (62) side, said second chamber (63) receiving a cylinder rod (70).

8. A landing gear (30) for an aircraft, for being hingedly mounted to a gear compartment (20), including a gear strut (31), a stem (33) defining a pivot axis (X) of the strut (31) and a cylinder device (50) according to any of claims 1 to 7, for pivoting said strut (31) about said pilot axis (X), said cylinder device (50) comprising a cylinder rod (70) mounted at a first end to said piston (80) and mounted at a second end to said landing gear (30), said cylinder barrel (60) being intended to be mounted to said gear compartment (20).

9. An access door (40) for a landing gear compartment (20) of an aircraft equipped with a cylinder device (50) according to any of claims 1 to 7, for opening and closing said access door (40), said cylinder device (50) comprising a cylinder rod (70) mounted at a first end to said piston (80) and mounted at a second end to said access door (40), said cylinder barrel (60) being intended to be mounted to said gear compartment (20).

10. A landing gear system for an aircraft comprising a gear compartment (20) equipped with at least one compartment access door (40) according to claim 9, and with a landing gear (30) according to claim 8.

## Patentansprüche

1. Zylindervorrichtung (50) mit einem Zylindergehäuse (60) und einem Kolben (80), translatorisch beweglich in einem durch eine Innenfläche (61) des genannten Zylindergehäuses (60) definierten Raum, wobei der genannte Kolben (80) eine erste Kammer (62) und eine zweite Kammer (63) innerhalb des genannten Raums begrenzt,
**dadurch gekennzeichnet, dass** sie Verriegelungseinrichtungen mit wenigstens einem beweglichen Verriegelungsteif (90) umfasst, dessen Sitz (66) in der genannten Innenfläche (61) des Zylindergehäuses (60) mündet, wobei das genannte bewegliche Teil (90) folgendermaßen gesteuert werden kann:
- aus einer ausgefahrenen Verriegelungsstellung, in der ein Anschlagsabschnitt (91) des genannten beweglichen Teils (90) aus dem genannten Sitz (66) hervorsteht und mit dem genannten Kolben (80) so kooperiert, dass er dessen Translation blockiert,
- in eine zurückgezogene Entriegelungsstellung, in der der genannte Anschlagsabschnitt (91) des genannten beweglichen Teils (90) sich im Innern des genannten Sitzes (66) befindet, so dass die Translation des genannten Kolbens freigegeben ist,
wobei der Kolben (80) eine in der Umfangsfläche (83) des Kolbens (80) befindliche Aussparung (85) umfasst, konzipiert um den genannten Anschlagsabschnitt (91) aufzunehmen, wenn das bewegliche Teil (90) sich in der ausgefahrenen Verriegelungsstellung befindet,
und der Kolben (80) eine Leitung (87) zur fluidischen Verbindung der ersten Kammer (62) mit der Aussparung (85) umfasst, was die Steuerung der Verschiebung des beweglichen Teils (90) aus der ausgefahrenen Verriegelungsstellung in die zurückgezogene Entriegelungsstellung ermöglicht, durch die Druckkraft des Fluids auf das bewegliche Teil (90).

2. Vorrichtung nach Anspruch 1, **dadurch gekennzeichnet, dass** das genannte bewegliche Teil (90) in dem genannten Sitz (66) translatorisch beweglich ist gemäß einer zur Verschiebungsachse des Kolbens (80) im Wesentlichen senkrechten Translationsachse.

3. Vorrichtung nach Anspruch 2, **dadurch gekennzeichnet, dass** die genannte Aussparung (85) eine Bodenfläche (85B) umfasst, wobei die genannte fluidische Verbindungsleitung (87) in der genannten Bodenfläche (85B) der genannten Aussparung (85) mündet.

4. Vorrichtung nach Anspruch 3, **dadurch gekennzeichnet, dass** die genannte fluidische Verbindungsleitung (87) in der genannten Aussparung (85) gemäß einer zur Translationsachse (R) des genannten beweglichen Teils (90) im Wesentlichen parallelen Achse mündet.

5. Vorrichtung nach einem der vorhergehenden Ansprüche 1 bis 4, **dadurch gekennzeichnet, dass** die Verriegelungseinrichtungen ein in dem genannten Sitz (66) befindliches Rückstellmittel (68) umfassen, das den genannten Anschlagsabschnitt (91) des beweglichen Teils (90) unterhalb eines bestimmten Fluiddrucks in der ersten Kamme (62) in der aus dem Sitz (66) hervorstehenden Stellung hält.

6. Vorrichtung nach einem der Ansprüche 1 bis 5, **dadurch gekennzeichnet, dass** der genannte Kolben (80) eine erste Kammer (62) und eine zweite Kammer (63) im Innern des genannten Raums begrenzt, und dadurch, dass der genannte Sitz (66) sich in Höhe eines Endes (64) des Zylindergehäuses (60) auf der Seite der ersten Kammer (62) befindet, wobei die genannte erste Kammer (62) eine Zylinderkolbenstange (70) aufnimmt.

7. Vorrichtung nach einem der Ansprüche 1 bis 5, **dadurch gekennzeichnet, dass** der genannte Kolben (80) eine erste Kammer (62) und eine zweite Kammer (63) im Innern des genannten Raums begrenzt, und dadurch, dass der genannte Sitz (66) sich in Höhe eines Endes (64) des Zylindergehäuses (60) auf der Seite der ersten Kammer (62) befindet, wobei die genannte zweite Kammer (63) eine Zylinderkolbenstange (70) aufnimmt.

8. Flugzeugfahrwerk (30), dazu bestimmt, gelenkig in bzw. an einen Fahrgestellkasten (20) montiert zu werden, mit einem Fahrgestellbein (31), einem eine Schwenkachse (X) des Beins (31) definierenden Ausleger (33) und einer Zylindervorrichtung (50) nach einem der Ansprüche 1 bis 7, dazu bestimmt, die Schwenkbewegung des genannten Beins (31) um die genannte Schwenkachse (X) herum zu gewährleisten, wobei die genannte Zylindervorrichtung (50) eine Zylinderkolbenstange (70) umfasst, deren erstes Ende mit dem Kolben (80) zusammengebaut ist und das zweite Ende mit dem genannten Flugzeugfahrwerk (30), wobei das genannte Zylindergehäuse (60) dazu bestimmt ist, in bzw. an den genannten Fahrgestellkasten (20) montiert zu werden.

9. Klappe (40) des Fahrwerkskasten (20) eines Flugzeugs, ausgerüstet mit einer Zylindervorrichtung (50) nach einem der Ansprüche 1 bis 7, dazu bestimmt, das Öffnen und das Schließen der genannten Klappe (40) zu gewährleisten, wobei die genannte Zylindervorrichtung (50) eine Zylinderkolbenstange (70) umfasst, deren erstes Ende mit dem Kolben (80) zusammengebaut ist und das zweite Ende mit der genannten Klappe (40), wobei das genannte Zylindergehäuse (60) dazu bestimmt ist, in bzw. an den genannten Fahrgestellkasten (20) montiert zu werden.

10. Flugzeugfahrwerksystem mit einem Fahrwerkkasten (20), ausgerüstet mit wenigstens einer Kastenklappe (40) nach Anspruch 9 und einem Fahrwerk (30) nach Anspruch 8.
